# EUROPEAN PATENT APPLICATION

(11) **EP 1 701 071 A1**
(43) Date of publication of application: **13.09.2006**
(21) Application number: 05005011.1
(22) Date of filing: 08.03.2005
(51) Int. Cl.: F16J 15/56, F16J 15/32

(54) **Oil seal**

(71) Applicant: Carl Freudenberg KG, 69469 Weinheim (DE)
(72) Inventor: Munekata, Shinobu, Fukushima-shi 960-1193 Fukushima (JP)

(57) **Abstract**

The invention effectively inhibits a lubricating load from being increased while maintaining a sufficient lubricity of a sliding part of a seal lip (10) even under a high pressure condition. Since a plurality of peripheral grooves (13) formed in an inner peripheral surface (12) outside a seal edge part (11) in the seal lip (10) and relative projections (14) residing therebetween are formed mutually in a continuous wave front shape, a crack starting from the peripheral grooves (13) is hard to be generated even in a state in which a high pressure acts on the seal lip (10), whereby it is possible to make a groove depth (d) enough deep not to be collapsed even under the high pressure condition. As a result, it is possible to maintain a sliding state of the slide part between the seal lip (10) and a reciprocating rod (2) by the peripheral grooves (13) even under the high pressure condition.

## Description

### BACKGROUND OF THE INVENTION

### Field of the Invention

The present invention relates to an oil seal which is used as a sealing means for a reciprocating rod of a high pressure gas cylinder, for example, a gas stay of a rear hatch in a motor vehicle or the like, and a sealing means for a reciprocating rod of a hydraulic equipment or the like.

### Description of the Related Art

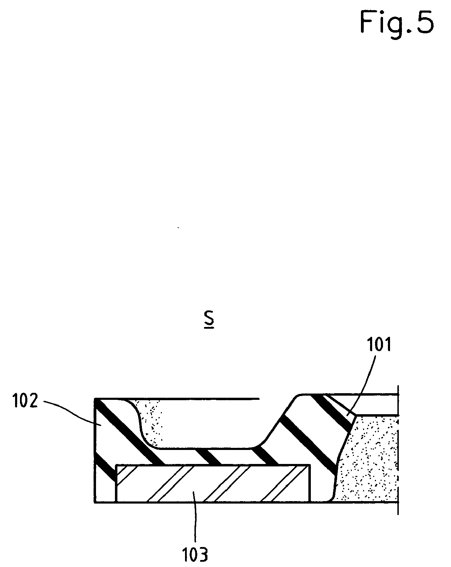

An oil seal structured by close contacting a seal lip with a relatively moving an opposing member includes an oil seal for rotation and an oil seal for reciprocation. Fig. 5 is a half cross sectional view showing a conventional oil seal used as a sealing means for a reciprocating rod of a cylinder apparatus by cutting the oil seal along a plane passing through an axis. The oil seal is structured such that an inner peripheral side seal lip 101 made of a rubber elastic material and an outer peripheral side gasket 102 are integrally molded in a vulcanizing manner (bonded in a vulcanizing manner) along an inner peripheral end part and an outer peripheral end part of a disc-like metal ring 103, The oil seal is fixed to an inner surface of a cylinder (not shown) in the outer peripheral side gasket 102 in a close contact state, and the inner peripheral side seal lip 101 is close contacted slidably with an outer peripheral surface of a reciprocating rod (not shown) inserted to the cylinder, whereby the oil seal carries on a sealing function.

Since this kind of oil seal is attached in such a manner that the seal lip 101 is directed to a sealed space S within the cylinder, a pressure in the sealed space S operates so as to increase a tension force of the seal lip 101 against the outer peripheral surface of the reciprocating rod in accordance with an increase of the pressure. Accordingly, there has been known a structure for intending to maintain a lubricity under a high pressure condition by forming a plurality of peripheral grooves continuously provided in a circumferential direction on an inner peripheral surface 101b outside a seal edge part 101 a in the seal lip 101, and making the peripheral grooves to function as an oil reservoir for lubrication, for example, as disclosed in Japanese Unexamined Utility Model Publication No, 7-23863, for the purpose of preventing a sliding load of the seal lip 101 with respect to the reciprocating rod from becoming excessive.

However, in conventional, the peripheral groove for lubrication formed in the inner peripheral surface 101 b outside the seal lip 101 is formed shallow so as not to cause a crack generation or the like. Accordingly, for example, as in the gas stay in the rear hatch of the motor vehicle or the like, under a used condition that an inner side of the cylinder becomes significantly high pressure, the peripheral groove nearly collapses in accordance with the increase of the tension force of the seal lip 101 due to the pressure in practice. Therefore, an amount of the oil held in the peripheral groove is reduced and a sufficient liquid lubricating film is not formed in a slide surface with the reciprocating rod, so that a lack of lubrication tends to be generated.

Further, there is a tendency that the oil within the peripheral groove is reduced at a time when the reciprocating rod stops. Accordingly, in particular, in the operation of the reciprocating rod after a long time stop, there is a risk that an abnormal noise caused by a stick slip phenomenon accompanied with the slide is generated, and an early abrasion is generated, due to a film cut (a squeeze out) of the slide surface of the seal lip 101,

### SUMMARY OF THE INVENTION

The present invention is made by taking the points mentioned above into consideration, and a technical object of the present invention is to provide an oil seal which can effectively inhibit a lubricating load from being increased while maintaining a sufficient lubricity of a sliding part of a seal lip with respect to a reciprocating rod even under a high pressure condition.

As a means for effectively achieving the technical object mentioned above, in accordance with a first aspect of the present invention, there is provided an oil seal forming a plurality of peripheral grooves continuously in the circumferential direction on an inner peripheral surface at outerer side than a seal edge part on a seal lip, in which the respective peripheral grooves and the relative projections residing therebetween are made mutually into a continuous wave front shape.

Further, in accordance with a second aspect of the present invention, there is provide an oil seal, in which a plurality of peripheral grooves are formed in the circumferential direction on an innerer peripheral surface than a seal edge part on a seal lip in a state where a groove shoulder at a seal edge part side in each peripheral groove is made into an obtuse angle, while a groove shoulder at an opposite side of the seal edge part is made into an acute angle.

In accordance with the oil seal on the basis of the first aspect of the present invention, since a plurality of peripheral grooves formed for lubrication on the inner peripheral surface of the seal lip and the relative projections residing therebetween are made mutually into the continuous wave front shape, the crack is hard to be generated from the peripheral grooves even in a state in which a high pressure is applied to the seal lip. Accordingly, it is possible to make the groove enough deep to be prevented from being completely collapsed even under the high pressure condition. As a result, a lubricating state of the slide surface of the seal lip by the peripheral grooves can be maintained even under the high pressure condition, the lubricating oil film cut is hard to be generated after the long time stop, it is possible to effectively prevent the abnormal noise from being generated due to a lack of lubrication at a time of sliding and it is possible to effectively prevent the early abrasion.

In accordance with the oil seal on the basis of the second aspect of the present invention, since the groove shoulder at the seal edge part side is made into the obtuse angle, while the groove shoulder at the opposite side of the seal edge part is made into the acute angle, in the groove shoulders in both sides of a plurality of peripheral grooves formed for lubrication on the inner peripheral surface of the seal lip, each of the groove shoulders in the opposite side of the seal edge part functions as a small seal lip directed to the sealed space side. Accordingly, the oil tends to be held within the peripheral grooves, the lubricating state of the slide surface of the seal lip is maintained by the peripheral grooves even under the high pressure condition, the lubricating oil film cut is hard to be generated after the long time stop, it is possible to effectively prevent the abnormal noise from being generated due to a lack of lubrication at a time of sliding and it is possible to effectively prevent the early abrasion.

### BRIEF DESCRIPTION OF THE DRAWINGS

Fig. 1 is a half cross sectional view of an unattached state showing a first preferable embodiment of an oil seal in accordance with the present invention by cutting along a plane passing through an axis thereof;
Fig. 2 is a partly cross sectional view of an attached state of the oil seal in Fig. 1;
Fig. 3 is a half cross sectional view of an unattached state showing a second preferable embodiment of an oil seal in accordance with the present invention by cutting along a plane passing through an axis thereof;
Fig. 4 is a partly cross sectional view of an attached state of the oil seal in Fig. 3; and
Fig. 5 is a half cross sectional view showing a conventional oil seal used as a sealing means for a reciprocating rod by cutting along a plane passing through an axis thereof.

### DESCRIPTION OF THE PREFERRED EMBODIMENT

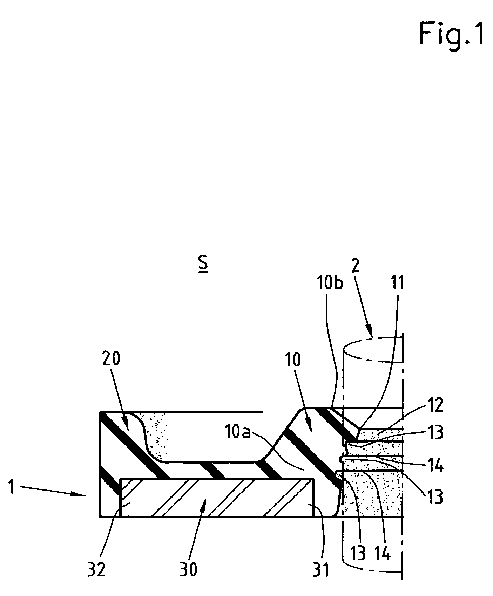

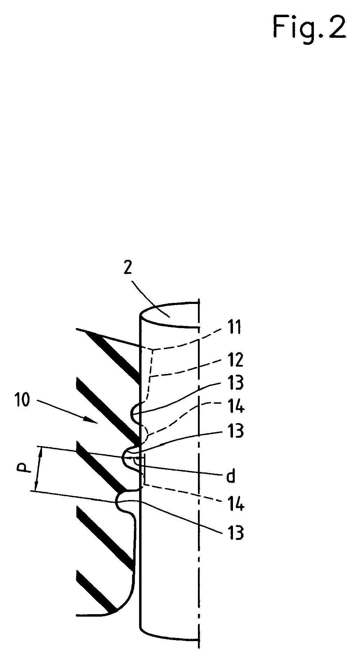

Fig. 1 is a half cross sectional view of an unattached state showing a first preferable embodiment of an oil seal in accordance with the present invention by cutting along a plane passing through an axis thereof, and Fig. 2 is a partly cross sectional view of an attached state thereof.

An oil seal 1 shown in Fig. 1 is structured such that an inner peripheral side seal lip 10 made of a rubber elastic material and continuously provided in a circumferential direction and an outer peripheral side gasket 20 are integrally molded in a vulcanizing manner (bonded in a vulcanizing manner) along an inner peripheral end part 31 and an outer peripheral end part 32 of a disc-like metal ring 30. It is preferable to employ a rubber elastic material which is excellent in an abrasion resistance, such as an urethane rubber, a fluorine-contained rubber, an acrylic rubber or the like.

The oil seal 1 is structured such that the metal ring 30 is bonded to the seal lip 10 and the gasket 20 in a vulcanizing manner at the same time when the seal lip 10 and the gasket 20 are molded in a vulcanizing manner, by positioning and setting the metal ring 30 which is previously coated with a vulcanizable adhesive agent within a predetermined metal mold (not shown), and filling an unvulcanized rubber material for molding within an annular cavity defined between the metal ring 30 and an inner surface of the metal mold in a mold closed state so as to heat and pressurize.

The seal lip protrudes toward one side in an axial direction from an inner peripheral part of the metal ring 30, and extends in a taper shape which becomes progressively smaller in diameter toward a leading end 10b side from a base part 10a thereof. A seal edge part 11 is formed in an inner peripheral side of the leading end 10b of the seal lip 10, and a plurality of peripheral grooves 13 continuously provided in a circumferential direction are formed in an inner peripheral surface 12 corresponding to an outer side (close to the metal ring 30) in an axial direction. As shown in Fig. 2, a groove bottom and a groove shoulder of each of the peripheral grooves 13 are formed in a round shape. Accordingly, each of the peripheral grooves 13 and a relative projection 14 therebetween are formed in a mutually continuous wave front shape.

The oil seal 1 in accordance with the embodiment mentioned above is attached to the cylinder in such a manner that the seal lip 10 is directed to a sealed space S within a cylinder (not shown) of a gas stay or the like, and is pressure inserted to an inner surface of the cylinder in the outer peripheral side gasket 20 so as to be fixed in a close contact state. Further, since the inner peripheral side seal lip 10 is slidably close contacted with an outer peripheral surface of a reciprocating rod 2 inserted to the cylinder with a suitable fastening margin, the oil seal 1 carries on a sealing function with respect to a sealed gas in the sealed space S. Further, since the seal lip 10 is formed in the taper shape which becomes progressively smaller in diameter toward the leading end 10b side from the base part 10a thereof, the fastening margin with respect to the reciprocating rod 2 becomes largest in the seal edge part 11, thereby achieving an excellent sealing performance.

Further, in order to prevent the seal lip 10 from being dragged so as to be expanded on the basis of a friction with the reciprocating rod 2 as much as possible, in a process that the reciprocating rod 2 is operated in a vertical direction in Figs. 1 and 2, a thickness in a diametrical of the seal lip 10 is made comparatively long, and a protruding length in an axial direction thereof is made comparatively short, In the illustrated embodiment, the thickness in the diametrical direction and the protruding length in the axial direction are set to be approximately the same level.

A plurality of peripheral grooves 13 formed in the inner peripheral surface 12 outside the seal edge part 11 of the seal lip 10 function as an oil reservoir holding the lubricating oil and accelerating formation of a lubricating oil film, and inhibit a contact area with the reciprocating rod 2 from being increased.

Further, in accordance with the embodiment, since a plurality of peripheral grooves 13 in the inner peripheral surface 12 of the seal lip 10 and the relative projections 14 residing therebetween are formed in the mutually continuous wave front shape, the crack starting from the peripheral grooves 13 is hard to be generated, even if the gas pressure in the sealed space S acting on the outer peripheral surface of the seal lip 10 becomes significantly high pressure. Accordingly, the groove can be made enough deep not to be completely collapsed even under the high pressure condition. In particular, the lubricating state of the slide surface 12 of the seal lip 10 by the peripheral groove 13 is maintained even under the high pressure condition by setting the size of the peripheral groove 13 to a groove depth d between 0.02 and 0.7 mm and a groove interval between 0.15 and 2 mm so as to secure a rigidity of the projection 14, whereby a lubricating oil film cut (a squeeze out) is hard to be generated after a long time stop, it is possible to effectively prevent an abnormal noise from being generated due to a lack of lubrication at a time of sliding, and it is possible to effectively prevent an early abrasion.

Further, since the peripheral grooves 13 and the relative projections 14 residing therebetween are formed in the mutually continuous wave front shape, the lubricating oil film formed in the outer peripheral surface of the reciprocating rod 2 is hard to be raked out to an atmospheric air side, so that this matter effectively functions for maintaining the lubricity.

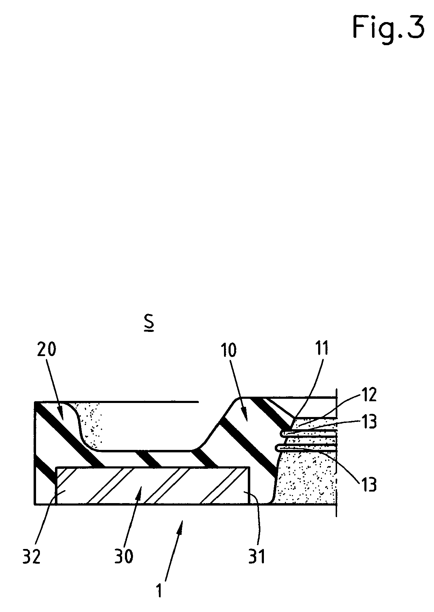

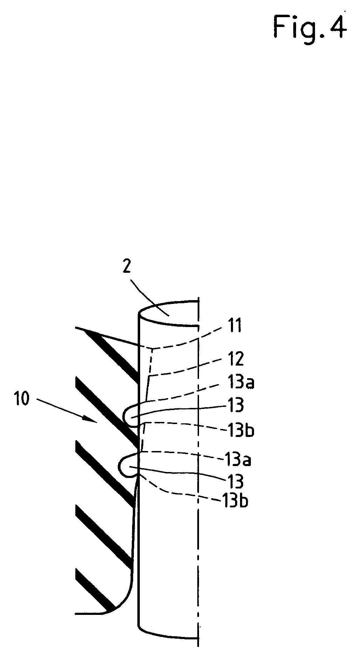

Next, Fig. 3 is a half cross sectional view of an unattached state showing a second preferable embodiment of an oil seal in accordance with the present invention by cutting along a plane passing through an axis thereof, and Fig. 4 is a partly cross sectional view of an attached state of the oil seal.

In the oil seal 1 shown in Fig. 3, a plurality of peripheral grooves 13 continuously provided in a circumferential direction are formed in the inner peripheral surface 12 forming an outer side (close to the metal ring 3) in an axial direction from the seal edge part 11 in the seal lip 10. As shown in Fig. 4, a groove bottom of each of the peripheral grooves 13 is formed in a round shape, a groove shoulder 13a in a side of the seal edge part 11 is formed in an obtuse angle, and a groove shoulder 13b in an opposite side of the seal edge part 11 is formed in an acute angle.

The other parts are provided basically with the same structure as that of Fig. 1. In other words, the oil seal 1 is attached to the cylinder in such a manner that the seal lip 10 is directed to a sealed space S within a cylinder (not shown) of a gas stay or the like, and is pressure inserted to an inner surface of the cylinder in the outer peripheral side gasket 20 so as to be fixed in a close contact state. Further, since the inner peripheral side seal lip 10 is slidably close contacted with an outer peripheral surface of a reciprocating rod 2 inserted to the cylinder with a suitable fastening margin, the oil seal 1 carries on a sealing function.

A plurality of peripheral grooves 13 formed in the inner peripheral surface 12 outside the seal edge part 11 of the seal lip 10 function as an oil reservoir holding the lubricating oil and accelerating formation of a lubricating oil film, and inhibit a contact area with the reciprocating rod 2 from being increased. Further, since the groove shoulder 13a in the side of the seal edge part 11 in each of the peripheral grooves 13 is formed in the obtuse angle, and the groove shoulder 13b in the opposite side is formed in the acute angle, each of the groove shoulders 13b formed in the acute angle is directed to the sealed space S side and functions as a small seal lip having a self-sealing function on the basis of the pressure within the peripheral groove 13. Accordingly, even if the gas pressure in the sealed space S becomes significantly high pressure, the oil is easily held within the peripheral grooves 13, and a sealing performance with respect to the sealed space S is improved.

Further, since the groove bottom of the peripheral groove 13 is formed in the round shape, the crack starting from the peripheral grooves 13 is hard to be generated, even if the gas pressure in the sealed space S acting on the outer peripheral surface of the seal lip 10 becomes significantly high pressure. Accordingly, the groove can be made enough deep not to be completely collapsed even under the high pressure condition, In particular, the lubricating state of the slide surface 12 of the seal lip 10 by the peripheral groove 13 is maintained even under the high pressure condition by setting the size of the peripheral groove 13 to a groove depth d between 0.02 and 0.7 mm and a groove interval between 0.15 and 2 mm in the same manner as the first embodiment described above, whereby a lubricating oil film cut is hard to be generated after a long time stop, it is possible to effectively prevent an abnormal noise from being generated due to a lack of lubrication at a time of sliding, and it is possible to effectively prevent an early abrasion.

Further, since the groove shoulder 13a in the side of the seal edge part 11 in each of the peripheral grooves 13, in other words, the groove shoulder 13a directed to the atmospheric air side is formed in the obtuse angle, the lubricating oil film formed in the outer peripheral surface of the reciprocating rod 2 is hard to be raked out to an atmospheric air side, so that this matter effectively functions for maintaining the lubricity.

## Claims

1. An oil seal forming a plurality of peripheral grooves (13) continuously in the circumferential direction on an inner peripheral surface (12) at outerer side than a seal edge part (11) on a seal lip (1); in which the respective peripheral grooves (13) and the relative projections (14) residing there between are made mutually into a continuous wave front shape.

2. An oil seal, in which a plurality of peripheral grooves (13) are formed in the circumferential direction on an innerer peripheral surface (12) than a seal edge part (11) on a seal lip (1) in a state where a groove shoulder (13a) at a seal edge part (11) side in each peripheral groove (13) is made into an obtuse angle, while a groove shoulder (13b) at an opposite side of the seal edge part (11) is made into an acute angle.
